# EUROPÄISCHE PATENTANMELDUNG

(11) **EP 4 674 584 A1**
(43) Veröffentlichungstag der Anmeldung: **07.01.2026**
(21) Anmeldenummer: 24186481.8
(22) Anmeldetag: 04.07.2024
(51) Int. Cl.: B27B 1/00, B23D 59/00

(54) **VERFAHREN UND VORRICHTUNG ZUR ERZEUGUNG VON SCHNITTHOLZ**

(71) Anmelder: Gebrüder Linck, Maschinenfabrik "Gatterlinck" GmbH & Co. KG, 77704 Oberkirch (DE)
(72) Erfinder: Rathke, Jörn, 77704 Oberkirch (DE)
(74) Vertreter: LBP Lemcke, Brommer & Partner Patentanwälte mbB

(57) **Zusammenfassung**

Verfahren zur Erzeugung von Schnittholz aus einem Baumstamm (1) mit den folgenden Verfahrensschritten:
A) Bestimmung einer ersten Schnittlösung für den Baumstamm (1), welche eine räumliche Anordnung von Seitenware und Hauptware umfasst;
B) Trennende Bearbeitung des Baumstammes (1) gemäß der Schnittlösung wobei eine im Wesentlichen ebene Oberfläche (10) der Haupt- oder Seitenware erzeugt wird;
C) Qualitätsprüfung der Oberfläche (10) der Seitenware zur Bestimmung mindestens eines Holzdefektes (12) und/oder einer Holzdefekteigenschaft;
D) Bestimmung einer zweiten Schnittlösung in Abhängigkeit des ermittelten Holzdefektes (12) und/oder der Holzdefekteigenschaft, wobei die Hauptware oder die Seitenware gegenüber der ersten Schnittlösung in zumindest zwei Seitenwarebretter (8) unterteilt wird und/oder eine Unterteilung mindestens zweier Hauptwarebretter oder zweier Seitenwarebretter (8) gegenüber der ersten Schnittlösung verändert wird;
E) Trennende Bearbeitung des Baumstammes (1) gemäß der zweiten Schnittlösung.

## Beschreibung

Die Erfindung betrifft ein Verfahren und eine Vorrichtung zur Erzeugung von Schnittholz aus einem Baumstamm.

In der industriellen Holzverarbeitung werden Baumstämme unter anderem zu Brettern verarbeitet, wobei eine möglichst hohe Holzausbeute erzielt werden soll. Hierfür wird ein zu verarbeitender Baumstamm üblicherweise hinsichtlich seiner Geometrie untersucht und eine sogenannte Schnittlösung ermittelt. Diese gibt eine mögliche Anordnung von Brettern in Bezug auf eine Stammgeometrie an. Durch eine Bearbeitung des Baumstammes entsprechend dieser Schnittlösung soll die gewünscht hohe Holzausbeute erzielt werden.

Die Bestimmung der Schnittlösung erfolgt üblicherweise, indem der Baumstamm während einer Vorschubbewegung mittels eines Profilsensors gescannt wird. Aus den dabei gewonnenen Messdaten wird eine Stammgeometrie ermittelt und anhand von dieser eine Anordnung der zu gewinnenden Bretter. Dabei befinden sich sogenannte Hauptwarebretter typischerweise in einem innenliegenden Querschnittsbereich eines Baumstammes, während Seitenwarebretter in einem demgegenüber außenliegenden Querschnittsbereich angeordnet sind.

Eine Herausforderung hängt damit zusammen, dass der Baumstamm verschiedene Qualitätsdefekte aufweisen kann, die äußerlich nicht erkennbar sind und bei der Ermittlung der Schnittlösung auf Grundlage einer äußeren Stammgeometrie nicht berücksichtigt werden können. Obwohl der Baumstamm also entsprechend der Schnittlösung bearbeitet und damit eine grundsätzlich hohe Holzausbeute erzielt wird, können durchaus auch Bretter erzeugt werden, die nicht die gewünschte Qualität aufweisen.

Es ist die Aufgabe der Erfindung, Mittel vorzuschlagen, mittels derer die Bearbeitung eines Baumstammes mit einer guten Holzausbeute möglich ist, wobei hergestellte Bretter die geforderte Qualität aufweisen.

Die Aufgabe wird gelöst mittels eines Verfahrens nach Anspruch 1 und einer Vorrichtung nach Anspruch 10. Vorteilhafte Weiterbildungen sind Gegenstände abhängiger Unteransprüche.

Das erfindungsgemäße Verfahren dient der Erzeugung von Schnittholz aus einem Baumstamm und umfasst folgende Verfahrensschritte:
A) Bestimmung einer ersten Schnittlösung für den Baumstamm, welche eine räumliche Anordnung von Seitenware und Hauptware umfasst;
B) Trennende Bearbeitung des Baumstammes gemäß der ersten Schnittlösung, wobei eine im Wesentlichen ebene Oberfläche der Haupt- oder Seitenware erzeugt wird;
C) Qualitätsprüfung der Oberfläche zur Bestimmung mindestens eines Holzdefektes und/oder einer Holzdefekteigenschaft;
D) Bestimmung einer zweiten Schnittlösung in Abhängigkeit des ermittelten Holzdefektes und/oder der Holzdefekteigenschaft, wobei zumindest ein Bereich der Hauptware oder der Seitenware gegenüber der ersten Schnittlösung in zumindest zwei Hauptwarebretter bzw. zwei Seitenwarebretter unterteilt wird und/oder eine Unterteilung mindestens zweier Hauptwarebretter bzw. mindestens zweier Seitenwarebretter gegenüber der ersten Schnittlösung verändert wird;
E) Trennende Bearbeitung des Baumstammes gemäß der zweiten Schnittlösung.

Das erfindungsgemäße Verfahren beruht auf der Erkenntnis, dass der Baumstamm nach der Erzeugung der Oberfläche der Haupt- oder Seitenware einer Qualitätsprüfung unterzogen werden kann, um eine zweite Schnittlösung zu bestimmen, mit der gegenüber der ersten Schnittlösung eine gute Holzausbeute und die gewünschte Brettqualität erzielbar ist. Dies ergibt sich insbesondere, da defektbehaftete Bereiche der Hauptware oder der Seitenware nicht eliminiert werden müssen, sondern lediglich in Abhängigkeit des detektierten Holzdefektes und/oder einer Holzdefekteigenschaft in mehrere Haupt- oder Seitenwarebretter unterteilt werden oder eine bereits bestehende Unterteilung der ersten Schnittlösung verändert wird.

Es ist relevant, dass die Bestimmung der zweiten Schnittlösung in Abhängigkeit des Holzdefektes und/oder der Holzdefekteigenschaft erfolgt. Dieser Aspekt beruht auf der Erkenntnis, dass die Qualität und damit auch der erzielbare Handelspreis eines Haupt- oder Seitenwarebrettes wesentlich davon abhängen kann, ob dieses Holzdefekte aufweist, in welcher Anzahl diese vorliegen oder etwa wie stark sie ausgeprägt sind. Dies ist für die Erfindung insofern relevant, da die hier beschriebene Optimierung der ersten Schnittlösung durch Bestimmung der zweiten Schnittlösung eine Verringerung der Breite eines Hauptwarebretts oder eines Seitenwarebrettes umfassen kann, was üblicherweise mit wirtschaftlichen Einbußen einhergeht.

Wirtschaftlichen Analysen haben überraschenderweise jedoch ergeben, dass der Handelswert eines Haupt- oder Seitenwarebretts in vorteilhafter Weise gesteigert werden kann, wenn dieses trotz vergleichsweise schmaler Abmessungen, insbesondere in der Breite, qualitätsabhängig hergestellt wird. Insbesondere kann der erzielbare Handelspreis eines solchen Haupt- oder Seitenwarebretts aufgrund der Verringerung von Holzdefekten stärker steigen, als dass er aufgrund einer verringerten Abmessung, insbesondere in der Breite, sinkt. Gleichzeitig kann das jeweils andere der unterteilten Haupt- oder Seitenwarebretter, welches eine geringere Qualität aufweist, für Zwecke vorgesehen werden, bei denen eine hohe Qualität nicht zwingend erforderlich ist, sodass hiermit ebenfalls ein wirtschaftlicher Vorteil erzielt werden kann.

Grundsätzlich ist es für die Durchführung des erfindungsgemäßen Verfahrens unerheblich, ob die in Verfahrensschritt C) geprüfte Oberfläche einer Hauptware oder einer Seitenware zuzuordnen ist. Die oben beschriebenen Vorteile lassen sich also unabhängig davon erreichen, ob die Bestimmung der zweiten Schnittlösung eine Unterteilung der Haupt- oder der Seitenware umfasst. Vorteilhaft ist jedoch, dass nach einer Qualitätsprüfung der Oberfläche der Hauptware, diese in zumindest zwei Hauptwarebretter unterteilt wird und/oder eine Unterteilung gemäß erster Schnittlösung verändert wird.

Analog ist es vorteilhaft, dass nach der Prüfung der Oberfläche der Seitenware, diese Seitenware in zumindest zwei Seitenwarebretter unterteilt wird und/oder eine Unterteilung gemäß erster Schnittlösung verändert wird. In anderen Worten kann die Hauptware gemäß der ersten Schnittlösung zumindest ein erstes Hauptwarebrett umfassen, welches gemäß der zweiten Schnittlösung in mindestens ein zweites und ein drittes Hauptwarebrett unterteilt ist. Dementsprechend kann die Seitenware gemäß der ersten Schnittlösung zumindest ein erstes Seitenwarebrett umfassen, welches gemäß der zweiten Schnittlösung in mindestens ein zweites und ein drittes Seitenwarebrett unterteilt ist.

Die Durchführung von Verfahrensschritt A) kann erfolgen, indem der Baumstamm entlang einer Vorschubrichtung bewegt wird und dabei in einen Erfassungsbereich eines oder mehrerer Profilssensoren gelangt und diesen durchquert. Bei dem Profilsensor kann es sich um einen Laser-Lichtschnittsensor oder einen vergleichbaren Sensor handeln, mittels dessen es möglich ist, dreidimensionale Daten zu ermitteln, die die Stammgeometrie zumindest teilweise repräsentieren. Insbesondere kann der Profilsensor in Bezug auf die Vorschubbewegung des Baumstammes ortsfest positioniert sein. Bevorzugt wird die Stammgeometrie in Abhängigkeit der Vorschubgeschwindigkeit des Baumstammes ermittelt.

Die ermittelte Stammgeometrie kann in Gestalt eines dreidimensionalen Modells, insbesondere auf Basis einer Punktewolke, vorliegen, anhand dessen insbesondere eines oder mehrere Querschnittsprofile des Baumstammes ableitbar sind. Die in Verfahrensschritt A) ermittelte erste Schnittlösung beruht vorzugsweise auf der ermittelten Stammgeometrie und gibt in Bezug dazu an, wie die Hauptware und die Seitenware und insbesondere davon umfasste Haupt- und Seitenwarebretter gegenüber dem Baumstamm bzw. der ermittelten Stammgeometrie angeordnet sind. Insbesondere kann gemäß der ersten Schnittlösung die Hauptware eines oder mehrere Hauptwarebretter umfassen und die Seitenware eines oder mehrere Seitenwarebretter. Insbesondere können die mehreren Hauptwarebretter und/oder die Seitenwarebretter gemäß der ersten Schnittlösung jeweils stapelweise vorliegen. Gemäß der ersten Schnittlösung können auch zumindest zwei Hauptwarebretter oder zumindest zwei Seitenwarebretter paarweise in einer gemeinsamen Ebene angeordnet sein, welche im Wesentlichen parallel zu den jeweiligen Breitseiten der Haupt- bzw. Seitenwarebretter verläuft. Es liegt auch im Rahmen der Erfindung, dass die erste Schnittlösung, die in Verfahrensschritt A) ermittelt wird, keine Unterteilung von Haupt- oder Seitenwarebrettern umfasst und lediglich eine mögliche Anordnung von Haupt- bzw. Seitenwarebrettern gegenüber dem Baumstamm angibt, welche insbesondere in Verfahrensschritt D) unterteilt werden können, um die Abmessungen und Anordnungen zu gewinnender Hauptwarebretter bzw. Seitenwarebretter gegenüber dem Baumstamm zu definieren.

Verfahrensschritt B) kann durchgeführt werden, indem ein Schwartenbereich des Baumstammes mittels eines Sägeschnittes am Stück von dem Baumstamm getrennt wird oder etwa mittels einer Fräsbearbeitung, indem der Schwartenbereich zu Hackschnitzeln zerspant wird. Relevant ist allein, dass infolge des Verfahrensschrittes B) zumindest eine gerade Seite erzeugt werden kann, die die Oberfläche der Haupt- oder Seitenware bildet, welche sich am Baumstamm befindet. Insbesondere handelt es sich bei der Oberfläche der Haupt- oder Seitenware um eine lange Breitseite mindestens eines Hauptwarebretts bzw. mindestens eines Seitenwarebretts. Wie oben erläutert, kann ein solches Haupt- oder Seitenwarebrett bereits in der ersten Schnittlösung, die in Verfahrensschritt A) ermittelt wurde, enthalten sein.

Es liegt im Rahmen der Erfindung, dass in Verfahrensschritt B) eine oder mehrere ebene Oberflächen erzeugt werden. Insbesondere kann der Baumstamm nach Durchführung des Verfahrensschrittes B) als sogenannter Kantling oder als Model vorliegen, welcher zwei bzw. vier gerade Seiten aufweist, die umseitig am Kantling bzw. am Model verteilt sind und insbesondere paarweise durch einen Waldkantenbereich voneinander getrennt sind. Es liegt im Rahmen der Erfindung, dass die Oberfläche der Haupt- oder Seitenware in den Verfahrensschritten B) und C) nicht die endgültige Oberfläche zu erzeugender Haupt- oder Seitenwarebretter ist, sodass diese insbesondere nach Verfahrensschritt D) weiterbearbeitet werden können, beispielsweise mittels Hobeln.

Verfahrensschritt C) umfasst die Qualitätsprüfung an der Oberfläche der Haupt- oder Seitenware. Diese kann mittels eines oder mehrerer optischer Prüfsysteme erfolgen, welche jeweils dazu ausgestaltet sind, zwei- und/oder dreidimensionale Bilddaten von der Oberfläche der Haupt- oder Seitenware zu ermitteln.

Insbesondere werden bei der Qualitätsprüfung gemäß Verfahrensschritt C) ein geometrisches Profil erfasst und/oder ein zweidimensionales Prüfbild erfasst. Das geometrische Profil kann eine dreidimensionale Geometrie an der Oberfläche der Haupt- oder Seitenware angeben und insbesondere in Abhängigkeit der Vorschubgeschwindigkeit des Baumstamms ermittelt werden. Insbesondere kann das optische Prüfsystem einen Profilsensor umfassen, welcher insbesondere identisch oder zumindest vergleichbar zu dem Profilsensor ausgebildet ist, der zur Ermittlung einer Stammgeometrie eingesetzt werden kann. Das Prüfbild kann in einer Bildebene eine zweidimensionale Verteilung von Graufstufenwerten und/oder Farbwerten, insbesondere der Farben Rot, Grün, Blau, umfassen. Insbesondere umfassen die zweidimenionalen Daten keinen Profilverlauf der Oberfläche, welcher sich senkrecht zu der Oberfläche erstreckt. Bevorzugt ist das optische Prüfsystem derart gegenüber dem Baumstamm angeordnet, dass ein Tiefenschärfebereich, welcher insbesondere parallel zu einer Schärfeebene des optischen Prüfsensors verläuft, sich während der Durchführung des Verfahrensschrittes C) im Wesentlichen parallel zu der geprüften Oberfläche der Haupt- oder Seitenware erstreckt.

Ein Holzdefekt kann einen Ast und/oder ein Astloch und/oder ein Riss und/oder eine Verwerfung und/oder einen Verfärbung und/oder Fäulnis und/oder Splintholz und/oder Insektenbefall umfassen. Eine Holzdefekteigenschaft kann eine Ausprägung eines Holzdefektes, insbesondere eines der voranstehenden Holzdefekte, beschreiben, etwa eine räumliche Position und/oder seine räumliche Ausbreitung an der Oberfläche der Haupt- oder Seitenware.

Verfahrensschritt C) kann einen Datenverarbeitungsschritt umfassen, mittels dessen die bei der bildgebenden Prüfung erhobenen Bilddaten ausgewertet werden, um den Holzdefekt und/oder die Holzdefekteigenschaft zu ermitteln. Bevorzugt kann dies eine Bildverarbeitung umfassen, bei der insbesondere eine Filterung und/oder Kantenerkennung und/oder Segmentierung und/oder morphologische Operation und/oder eine Merkmalsextraktion und/oder eine Mustererkennung und/oder eine Musterklassifizierung und/oder eine Texturanalyse und/oder eine Histogrammanalyse durchgeführt wird, um den Holzdefekt und/oder die Holzdefekteigenschaft zu erfassen. Ferner liegt es im Rahmen der Erfindung, dass ein Datenverarbeitungsschritt den Einsatz eines Auswertealgorithmus auf Basis einer künstlichen Intelligenz und/oder maschinellen Lernens umfasst.

Verfahrensschritt D) umfasst eine Bestimmung der zweiten Schnittlösung, welche gegenüber der ursprünglichen, ersten Schnittlösung eine unterschiedliche Ausprägung der Haupt- oder Seitenware umfasst. Hierbei kann ein in der ersten Schnittlösung definiertes Hauptwarebrett oder ein Seitenwarebrett in mindestens zwei Hauptwarebretter bzw. zwei Seitenwarebretter unterteilt werden oder etwa zwei bereits unterteilte, benachbarte Hauptwarebretter oder Seitenwarebretter hinsichtlich ihres Größenverhältnisses, insbesondere eines Breitenverhältnisses,oder etwa ihrer jeweiligen Positionen gegenüber dem Baumstamm verändert werden. Insbesondere wird die Haupt- oder Seitenware derart in zumindest zwei Haupt- bzw. Seitenwarebretter unterteilt, dass eine Trennebene im Wesentlichen orthogonal zu der geprüften Oberfläche der Hauptware bzw. Seitenware definiert wird oder eine Unterteilung zwischen zwei Hauptwarebrettern oder Seitenwarebrettern verändert wird, indem eine solche Trennebene verschoben, insbesondere parallel versetzt wird, sodass sich insbesondere die Breiten der Haupt- oder Seitenwarebretter verändern.

Eine trennende Bearbeitung gemäß Verfahrensschritt E) erfolgt entsprechend der in Verfahrensschritt D) bestimmten zweiten, optimierten Schnittlösung und umfasst insbesondere die Erzeugung der unterteilten Haupt- und Seitenwarebretter. Hierbei können zwei an die Oberfläche der Haupt- oder Seitenware angrenzende Waldkantenbereiche ausgefräst und die unterteilten Haupt- oder Seitenwarebretter mittels eines oder mehrerer Sägeschnitte voneinander oder von dem Baumstamm getrennt werden.

In einer vorteilhaften Weiterbildung wird in Verfahrensschritt C) der Holzdefekt an der Oberfläche ortsaufgelöst und unter Bestimmung einer Defektposition und/oder räumlichen Defektausbreitung ermittelt.

Eine ortsaufgelöste Ermittlung des Holzdefektes ermöglicht es, eine Position des Holzdefektes in Bezug auf den Baumstamm bzw. die ermittelte Stammgeometrie zu bestimmen und insbesondere in Abhängigkeit davon die zweite Schnittlösung abzuleiten. In einer einfachen Ausführungsform kann ein optisches Prüfsystem, das in Verfahrensschritt C) einsetzbar ist, derart kalibriert sein, dass die Defektposition und/oder Defektausbreitung an der Oberfläche unmittelbar anhand der erhobenen Prüfdaten ermittelt werden kann, insbesondere in Bezug auf die Stammgeometrie.

In einer vorteilhaften Weiterbildung kann der Holzdefekt, insbesondere eine Defektposition und/oder Defektausbreitung gegenüber dem Baumstamm, in Abhängigkeit einer Waldkante und/oder eines Waldkantenbereichs, welche die Oberfläche der Hauptware oder Seitenware jeweils seitlich begrenzen, ortsaufgelöst ermittelt werden. Hierbei wird die Waldkante und/oder der Waldkantenbereich vor und/oder während des Verfahrensschrittes C) erfasst.

Die vorstehend beschriebene Weiterbildung beruht auf der Erkenntnis, dass die Waldkante und/oder der Waldkantenbereich am Baumstamm, insbesondere auch am Kantling oder am Model, dazu dienen können, die ortsaufgelöste Ermittlung eines Holzdefektes und/oder einer Holzdefekteigenschaft in Bezug auf den Baumstamm, insbesondere auch in Bezug auf den Kantling oder Model, zu vereinfachen. Die Waldkante bezeichnet dabei einen Profilverlauf entlang der Stammachse, welcher durch die trennende Bearbeitung des Baumstammes in Verfahrensschritt B) entsteht und dabei unmittelbar die Oberfläche der Haupt- oder Seitenware seitlich begrenzt. Der Waldkantenbereich grenzt unmittelbar an die Waldkante an und bezeichnet hierbei eine durch den natürlichen Wuchs des Baumstammes bedingte, außenseitige Geometrie des Baumstammes oder insbesondere Bereiche davon im Falle eines Kantlings oder Models. Sowohl die Waldkante als auch der Waldkantenbereich können aufgrund des individuellen Wuchses eines Baumstammes einen entsprechend individuellen Verlauf aufweisen, welcher als örtliche Referenz für einen Holzdefekt und/oder eine Holzdefektausbreitung gegenüber dem Baumstamm oder Kantlings oder Models dienen kann.

Insbesondere können die Waldkante und/oder der Waldkantenbereich in der für Verfahrensschritt A) ermittelbaren Stammgeometrie enthalten sein, sodass sie als Referenz dienen können, anhand derer die Defektposition und/oder die Defektausbreitung in Bezug auf den Baumstamm bzw. die Stammgeometrie oder des Kantlings oder Models bestimmt werden können. Vorteilhafterweise wird daher eine vor und/oder während des Verfahrensschrittes A) ermittelte Stammgeometrie zur Bestimmung der ersten Schnittlösung verwendet, welche die Waldkante und/oder den Waldkantenbereich umfasst.

Insbesondere erfolgt in Verfahrensschritt D) ein Abgleich zwischen einem dreidimensionalen Verlauf des Waldkantenbereichs, welcher in der ermittelten Stammgeometrie für Verfahrensschritt A) enthalten ist und welcher in einem Prüfergebnis einer dreidimensionalen Prüfung des Verfahrensschrittes C) enthalten ist. In Abhängigkeit hiervon kann die Defektposition und/oder Defektausbreitung in Bezug auf den Baumstamm, insbesondere auch den Kantling oder Model, genau bestimmt werden.

Zusätzlich oder alternativ erfolgt in Verfahrensschritt D) ein Abgleich zwischen einem zweidimensionalen Verlauf der Waldkante, welche in einem Profilschnitt der ermittelten Stammgeometrie für Verfahrensschritt A) enthalten ist und welcher in einem Prüfergebnis einer zweidimensionalen Prüfung des Verfahrensschrittes C) enthalten ist. Insbesondere erstreckt sich der Profilschnitt im Wesentlichen parallel zu der Stammachse. In Abhängigkeit hiervon kann die Defektposition und/oder Defektausbreitung in Bezug auf den Baumstamm, insbesondere auch den Kantling oder Model, genau bestimmt werden.

In einer vorteilhaften Weiterbildung kommt vor und/oder während des Verfahrensschrittes C) für die bildgebende Prüfung der Oberfläche der Haupt- oder Seitenware und zur Ermittlung der Waldkante und/oder des Waldkantenbereichs eine optische Messvorrichtung oder mehrere, unterschiedliche optische Messvorrichtungen zum Einsatz.

Bei einer denkbaren Ausführungsform der vorstehend beschriebenen vorteilhaften Weiterbildung kann die optische Messvorrichtung eine bildgebende Kamera umfassen, welche sowohl die Oberfläche der Haupt- oder Seitenware als auch die daran angrenzende Waldkante und/oder den Waldkantenbereich erfasst. Dadurch kann ein einziges Oberflächenbild dazu dienen, die erfassbaren Holzdefekte ortsaufgelöst und deren Position und Ausbreitung in Bezug auf die Stammgeometrie mit hoher Genauigkeit zu ermitteln, insbesondere in Abhängigkeit der Waldkante und/oder des Waldkantenbereichs. Insbesondere kann die mindestens eine optische Messvorrichtung dazu ausgestaltet sein, die Oberfläche der Haupt- oder Seitenware ausschließlich zweidimensional zu prüfen und dabei insbesondere keinen Rückschluss auf das geometrische Profil der geprüften Oberfläche geben.

In einer anderen denkbaren Ausführungsform können mehrere optische Messvorrichtungen voneinander getrennt dazu dienen, die Oberfläche der Haupt- oder Seitenware und die Waldkante und/oder den Waldkantenbereich zu erfassen. Dadurch ist es möglich, die optischen Messvorrichtungen jeweils hinsichtlich der durchzuführenden Messaufgabe zu optimieren. Insbesondere können die Messvorrichtungen eine Relativposition zueinander aufweisen, mittels derer die erfasste Waldkante bzw. der Waldkantenbereich und das Oberflächenbild miteinander räumlich in Bezug gesetzt werden können. Insbesondere liegt es im Rahmen dieser Ausführungsform, dass die Waldkante und/oder der Waldkantenbereich mittels eines Profilsensors ermittelt werden und die Oberfläche der Haupt- oder Seitenware mittels eines bildgebenden Sensors geprüft wird. Hierbei ist es möglich, dass der Profilsensor die Oberfläche zumindest teilweise erfasst, die hierbei erhobenen Profildaten der Oberfläche jedoch nicht für die Qualitätsprüfung verwendet werden.

In einer vorteilhaften Weiterbildung wird Verfahrensschritt D) in Abhängigkeit eines defektabhängigen Qualitätsparameters durchgeführt, insbesondere derart, dass nach Verfahrensschritt D) zumindest eines der unterteilten Haupt- oder Seitenwarebretter sich hinsichtlich eines oder mehrerer Holzdefekte und/oder Holzdefekteigenschaften von dem jeweils anderen der unterteilten Haupt- bzw. Seitenwarebretter unterscheidet. Es liegt auch im Rahmen der vorteilhaften Weiterbildung, dass die Haupt- oder Seitenwarebretter derart unterteilt werden, dass sich diese hinsichtlich des Qualitätsparameters nicht unterscheiden. Dies kann etwa dann vorteilhaft sein, wenn die Gesamtanzahl detektierter Defekte an der Oberfläche der Haupt- oder Seitenware durch eine Unterteilung gemäß der zweiten Schnittlösung gleichmäßig auf die unterteilten Haupt- und Seitenwarebretter aufgeteilt werden kann, sodass sich ein gewünschtes Verhältnis aus Defektanzahl oder Holzdefekteigenschaft zu einer Breitenabmessung eines des unterteilten Haupt- oder Seitenwarebretts ergibt.

Der Qualitätsparameter kann als mindestens ein Kennwert angesehen werden, welcher eine Information darüber enthält, inwieweit eine qualitätsrelevante Eigenschaft an der Oberfläche der Haupt- oder Seitenware oder jedoch eines der unterteilten Haupt- oder Seitenwarebretter ausgeprägt ist. Insbesondere kann die Oberfläche der Haupt- oder Seitenware vor Verfahrensschritt D) einen ersten Qualitätsparameter aufweisen und die unterteilten Haupt- und Seitenwarebretter jeweils einen zweiten Qualitätsparameter aufweisen.

Die vorteilhafte Weiterbildung ist nicht darauf beschränkt, wie der Qualitätsparameter definiert ist. Es ist denkbar, dass der Qualitätsparameter nutzer- oder anlagenabhängig definiert sein kann und dabei von dem Holzdefekt und/oder der Holzdefekteigenschaft abhängig ist. Insbesondere kann es sich um eine Kennzahl handeln, welche angibt, ob Holzdefekte vorhanden sind und/oder wie die Holzdefekteigenschaft ausgeprägt ist.

Insbesondere können mehrere Qualitätsparameter zur Durchführung des Verfahrensschrittes D) ermittelt werden, insbesondere ortsabhängig in Bezug auf die geprüfte Oberfläche in Verfahrensschritt C).

Bevorzugt kann sich der Qualitätsparameter auf die Oberfläche der Haupt- oder Seitenware aus in Verfahrensschritt C) beziehen und dabei beispielsweise ein Verhältnis zwischen einer Anzahl an detektierten Holzdefekten und/oder einer Holzdefekteigenschaft zu einer Abmessung der Oberfläche angeben.

Insbesondere kann für die Durchführung von Verfahrensschritt D) ein Schwellenwert definiert sein, welcher von einem Qualitätsparameter nicht über- oder unterschritten werden darf, um eine Unterteilung der Haupt- oder Seitenware vorzunehmen und insbesondere die Abmessungen und Positionen der unterteilten Haupt- und Seitenwarebretter gemäß der zweiten Schnittlösung festzulegen.

In einem einfachen Beispiel kann der Qualitätsparameter also eine Anzahl von Holzdefekten sein, die an der Oberfläche der Seitenware in Verfahrensschritt C) ermittelt werden, wobei eine Schwellenanzahl an Holzdefekten überschritten wird. Es ist denkbar, dass die Unterteilung der Haupt- oder Seitenware gemäß der zweiten, optimierten Schnittlösung anschließend derart erfolgt, dass eines der Haupt- oder Seitenwarebretter keine Holzdefekte und das jeweils andere Seitenwarebrett alle detektierten Holzdefekte aufweist.

Ebenso ist denkbar, dass die unterteilten Haupt- oder Seitenwarebretter sich hinsichtlich der Anzahl der Holzdefekte nicht unterscheiden. Dies beruht auf der Erkenntnis, dass ein Trennschnitt zu einer Wertsteigerung gegenüber einem größeren, nicht unterteilten Brett führen kann, obwohl die Haupt- oder Seitenwarebretter nach ihrer Unterteilung bzw. Änderung einer Unterteilung gleichen Qualitätsklassen zuzuordnen sind oder durch gleiche Qualitätsparameter charakterisierbar sind.

Eine Defektdichte, Defektposition oder Defektart kann ebenfalls zur Ermittlung des oben genannten Qualitätsparameters verwendet werden, wobei es ebenfalls grundsätzlich unerheblich ist, wie dieser bestimmt wird und auf welche Weise dieser bei einer Unterteilung der Haupt- oder Seitenware berücksichtigt wird.

In einer vorteilhaften Weiterbildung ist in Verfahrensschritt C) der ermittelte Holzdefekt zumindest teilweise von einem Ast gebildet, welcher sich von der Oberfläche zumindest durch die Hauptware oder die Seitenware erstreckt.

Insbesondere kann der ermittelte Holzdefekt einen Astquerschnitt oder einen Teil davon umfassen und/oder eine Astwuchsposition umfassen. Im Rahmen der hier beschrieben Erfindung kann der Begriff "Ast" einen Teil eines Baumstammes beschreiben, welcher sich innerhalb des Baumstammes oder Kantlings erstreckt, insbesondere von der Oberfläche der Hauptware oder Seitenware in das Stamminnere.

Untersuchungen haben gezeigt, dass ein Ast einen Holzdefekt darstellt, der sich zwar auf die Qualität eines Brettes auswirkt und damit auch auf seinen wirtschaftlichen Wert. Jedoch muss ein Haupt- oder Seitenwarebrett, das durch einen Astwuchs betroffen ist, nicht zwangsläufig eliminiert und von der Weiterverarbeitung ausgeschlossen werden. Vielmehr ist es vorteilhaft, auch von Astwuchs betroffene Haupt- oder Seitenwarebretter wertschöpfend weiterzuverarbeiten. Obwohl diese regelmäßig zwar eine geringere Qualität aufweisen als solche Bretter, die nicht von Astwuchs betroffen sind, können sie dennoch für technische Einsatzzwecke geeignet sein, bei denen vergleichsweise niedrige Anforderungen an ihre Qualität gestellt sind.

In einer vorteilhaften Weiterbildung wird in Verfahrensschritt B) zumindest ein erstes Seitenwarebrett gemäß der ersten Schnittlösung von dem Baumstamm abgetrennt und dadurch eine ebene Oberfläche der Seitenware an dem Baumstamm geschaffen, an welcher zumindest Verfahrensschritt C) durchgeführt wird.

Gemäß der vorstehend beschriebenen Weiterbildung kann die Seitenware gemäß der ersten Schnittlösung aus Verfahrensschritt A) einen Stapel mehrerer Seitenwarebretter umfassen. Eine trennende Bearbeitung des Verfahrensschrittes B) erfolgt hierbei, indem nicht lediglich ein Schwartenbereich des Baumstammes entfernt wird, sondern darüber hinaus auch ein Seitenwarebrett des Seitenwarestapels, wodurch die Oberfläche des darunterliegenden Seitenwarebrettes des Seitenwarestapels freigelegt und in Verfahrensschritt C) geprüft wird. Bevorzugt wird das in Verfahrensschritt C) geprüfte Seitenwarebrett in Verfahrensschritt D) in zwei Seitenwarebretter unterteilt und diese anschließend in Verfahrensschritt E) von dem Baumstamm getrennt.

Es ist eine Erkenntnis, dass das erste Seitenwarebrett eines Seitenwarenstapels in der Regel kleinere Abmessungen, insbesondere in der Breite aufweist, als die darunterliegenden Seitenwarebretter. Dies hängt damit zusammen, dass die Stammbreite in radialer Richtung aufgrund eines runden Querschnittes abnimmt, sodass außen liegende Seitenwarebretter entsprechend kleinere Breiten aufweisen. Aus wirtschaftlichen Gesichtspunkten ist es daher nicht lohnend, diese außen liegenden Seitenwarebretter für eine zweite, optimierte Schnittlösung zu berücksichtigen. Zwar könnte eine Unterteilung dieses ersten Seitenwarebretts zu zwei Teilbrettern führen, von denen eines weniger Holzdefekte aufweist als das jeweils andere. Allerdings ist die Breitenabmessung des ersten Seitenwarebretts üblicherweise derart gering, dass eine weitere Unterteilung zu zwei Teilbrettern nicht zu einem bedeutenden wirtschaftlichen Vorteil führt. Es ist in anderen Worten vorteilhaft, dass die zweite, optimierte Schnittlösung in Abhängigkeit der Oberfläche nicht in Abhängigkeit eines ersten Seitenwarebretts einer Schnittlösung des Verfahrensschrittes A) ermittelt wird, sondern anhand eines darunter liegenden Seitenwarebretts, insbesondere eines zweiten Seitenwarebretts.

In einer vorteilhaften Weiterbildung wird in Verfahrensschritt D) die Haupt- oder Seitenware derart unterteilt, dass eine Trennebene, welche im Wesentlichen orthogonal zu der Oberfläche der Hauptware oder Seitenware verläuft und die zwei Hauptwarebretter bzw. zwei Seitenwarebretter unterteilt, erzeugt und/oder verschoben wird.

Die Trennebene gibt im Rahmen der zweiten Schnittlösung gemäß Verfahrensschritt A) oder der zweiten, optimierten Schnittlösung gemäß Verfahrensschritt D) eine räumliche Trennung zwischen zwei Haupt- oder Seitenwarebrettern an. Bei der Trennebene kann es sich in Verfahrensschritt D) insbesondere um einen fiktiven Bereich handeln, in dem die Haupt- oder Seitenware unterteilt wird, um zwei Haupt- oder Seitenwarebretter voneinander zu trennen.

Vorzugsweise wird in Verfahrensschritt E) ein Ritz an der Seitenware erzeugt, welcher insbesondere entlang der Trennebene verläuft, und anschließend zwei derart voneinander getrennte Seitenwarebretter mittels eines Trennschnittes von dem Baumstamm abgetrennt. Dadurch ist es auf einfache Weise möglich, die Bearbeitung des Baumstammes entsprechend der zweiten, optimierten Schnittlösung durchzuführen. Die Erzeugung des Ritzes kann mittels einer Ritzsäge erfolgen, welche bei einer Vorschubbewegung des Baumstammes an der Oberfläche der Seitenware in einen trennenden Eingriff mit dem Baumstamm gelangt, wodurch die Seitenware räumlich in mindestens zwei Seitenwarebretter unterteilt wird.

Wie oben erläutert, wird die Aufgabe auch gelöst durch eine Vorrichtung zur Erzeugung von Schnittholz. Die Vorrichtung umfasst ein Fördermittel, welches dazu vorgesehen ist, einen Baumstamm entlang seiner Stammachse in einer Hauptförderrichtung zu transportieren sowie mindestens einen Profilsensor, welcher derart angeordnet ist, um bei der Förderbewegung des Baumstammes eine Stammgeometrie zu ermitteln. Die Vorrichtung umfasst ferner eine Datenverarbeitungseinheit, welche signaltechnisch mit dem Profilsensor verbunden ist und dazu eingerichtet ist, eine erste Schnittlösung in Abhängigkeit der Stammgeometrie zu ermitteln. Ein erstes Trennmittel ist derart angeordnet und dazu ausgebildet, um mit dem Baumstamm während der Förderbewegung in einen trennenden Eingriff zu gelangen und eine im Wesentlichen ebene Oberfläche der Haupt- oder Seitenware gemäß der ermittelten Schnittlösung zu erzeugen. Mindestens ein Qualitätssensor ist angeordnet, um die Oberfläche der Haupt- oder Seitenware zu prüfen und ist dabei dazu eingerichtet, mindestens einen Holzdefekt und/oder eine Holzdefekteigenschaft an der Oberfläche zu ermitteln. Der Qualitätssensor und die Datenverarbeitungseinheit sind signaltechnisch miteinander verbunden, wobei die Datenverarbeitungseinheit dazu eingerichtet ist, eine zweite Schnittlösung in Abhängigkeit des Holzdefektes zu ermitteln. Hierbei ist die Haupt- oder Seitenware in zumindest zwei Hauptwarebretter bzw. zwei Seitenwarebretter unterteilt und/oder eine Unterteilung der Schnittlösung zweier Haupt- oder Seitenwarebretter gegenüber der ersten Schnittlösung verändert. Ein zweites Trennmittel ist derart angeordnet und dazu ausgebildet, um mit dem Baumstamm während der Förderbewegung in einen spanenden Eingriff zu gelangen und ihn gemäß der optimierten Schnittlösung zu bearbeiten.

Insbesondere ist die erfindungsgemäße Vorrichtung dazu geeignet, das erfindungsgemäße Verfahren oder eine vorteilhafte Weiterbildung davon durchzuführen. Insbesondere ist das erfindungsgemäße Verfahren oder eine vorteilhafte Weiterbildung davon mittels der erfindungsgemäßen Vorrichtung oder einer vorteilhaften Weiterbildung davon durchführbar. Insofern gelten hinsichtlich der denkbaren Ausgestaltungen der Vorrichtung sowie der damit erzielbaren Vorteile die Ausführungen bezüglich des oben beschriebenen Verfahrens entsprechend.

Vorteile und mögliche Ausgestaltungen der Erfindung sind nachfolgend anhand von Ausführungsbeispielen und den Figuren erläutert. Es zeigen
- Figur 1: die Bestimmung einer ersten Schnittlösung für einen Baum-stamm;
- Figur 2: die Profilierung einer Seitenwareoberfläche an dem Baumstamm entsprechend der Schnittlösung;
- Figur 3: eine Qualitätsprüfung der Seitenwareoberfläche;
- Figur 4: die Bestimmung einer zweiten, optimierten Schnittlösung für den Baumstamm, bei der ein Seitenwarebrett unterteilt ist.

In der industriellen Holzverarbeitung werden Baumstämme üblicherweise zu Brettern verarbeitet, die aus unterschiedlichen Querschnittsbereichen der Baumstämme gewonnen werden. Diejenigen Bretter, die aus einem innenliegenden Querschnittsbereich eines Baumstammes gewonnen werden, werden als Hauptwarebretter bezeichnet. Bretter, die im Vergleich dazu aus einem außenliegenden Querschnittsbereich gewonnen werden, werden als Seitenwarebretter bezeichnet.

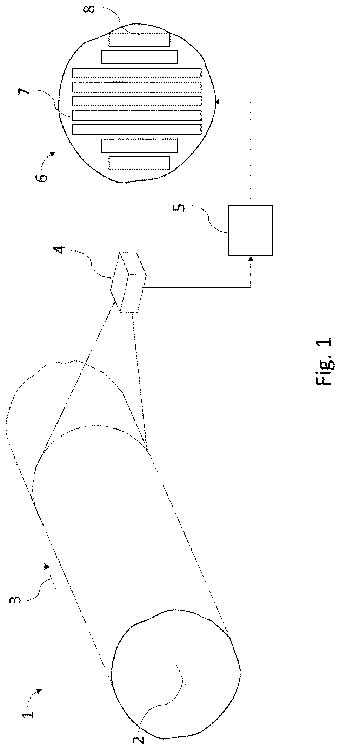

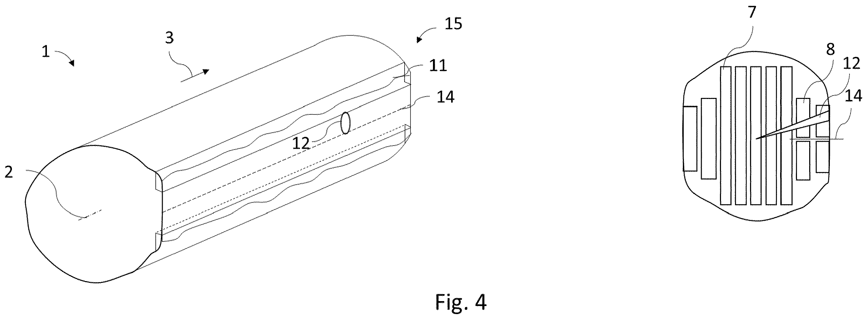

Um eine gute Holzausbeute zu erzielen, wird ein Baumstamm typischerweise mittels eines Profilsensors gescannt und auf Grundlage der dabei gewonnenen Daten eine Schnittlösung ermittelt. Diese gibt an, wie die zu gewinnenden Haupt- und Seitenwarebretter gegenüber der Stammgeometrie angeordnet sind und welche Abmessungen diese haben, um eine gute Holzausbeute zu erreichen. Zur Gewinnung der Haupt- und Seitenwarebretter wird der Baumstamm entsprechend der Schnittlösung üblicherweise zunächst zu einem Kantling verarbeitet, wodurch zunächst eine im Wesentlichen ebene Seite erzeugt wird, die die ebene Oberfläche der Seitenware bildet, damit diese am Baumstamm profiliert werden kann. Problematisch ist, dass nicht alle Holzdefekte anhand der Profildaten des Baumstammes ermittelt und bei der Bestimmung der Schnittlösung nicht hinreichend berücksichtigt werden können. Dies führt zu einem hohen Anteil an qualitativ minderwertigen Brettern. Anhand der Figuren 1 und 4 ist ein Verfahren sowie die zu dessen Durchführung erforderlichen Mittel beschrieben, mittels derer sich die gewünschte Qualität der erzeugbaren Bretter bei gleichzeitig hoher Holzausbeute erreichen lässt.

Figur 1 zeigt einen Baumstamm 1, welcher eine im Wesentlichen zylindrische Grundgeometrie aufweist, die sich entlang seiner Stammachse 2 erstreckt. Der Baumstamm 1 weist ein unregelmäßiges Oberflächenprofil auf, welches durch seinen natürlichen Wuchs bedingt ist. Für seine Bearbeitung wird der Baumstamm 1 in einer Vorschubrichtung 3 gefördert und gelangt dabei in einen Erfassungsbereich mehrerer Profilsensoren 4, von denen in dem hier gezeigten Ausführungsbeispiel nur ein Profilsensor 4 gezeigt ist. Die Profilsensoren 4 können beispielhaft jeweils als Laser-Lichtschnittsensoren ausgebildet sein.

Die von den Profilsensoren 4 erfassten Daten werden an eine Recheneinheit 5 übermittelt, die unter Berücksichtigung der Relativbewegung zwischen dem Baumstamm 1 und den Profilsensoren 4 eine Stammgeometrie und eine davon abhängige erste Schnittlösung 6 ermittelt. Die erste Schnittlösung 6 enthält, wie oben angedeutet, mehrere Hauptwarebretter 7, welche in dem innenliegenden Querschnittsbereich des Baumstammes 1 angeordnet sind sowie mehrere Seitenwarebretter 8, die in einem außenliegenden Querschnittsbereich des Baumstammes 1 angeordnet sind. Zur besseren Übersicht sind jeweils nur ein Hauptwarebrett 7 und nur ein Seitenwarebrett 8 mit Bezugszeichen versehen.

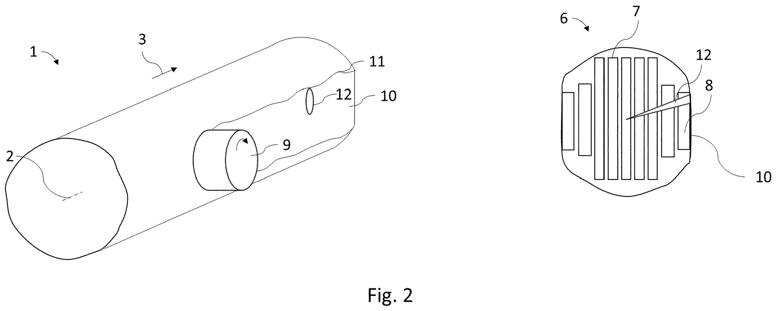

Figur 2 zeigt den Baumstamm 1, welcher entsprechend der ermittelten ersten Schnittlösung 6 bereichsweise trennend bearbeitet wird. Hierbei wird der Baumstamm 1 entlang der Vorschubrichtung 3 gegen eine rotierenden Messerkopf 9 bewegt, wodurch dieser in trennenden Eingriff mit dem Baumstamm 1 gelangt. Dadurch wird ein Schwartenbereich vom Baumstamm 1 getrennt, wodurch die Oberfläche 10 eines darunter liegenden Seitenwarebretts 8 erzeugt wird. Anstelle des in Figur 2 gezeigten Messkopfes 9 kann auch ein Sägemittel vorgesehen sein, mittels dessen der Schwartenbereich des Baumstammes 1 am Stück von dem Baumstamm 1 getrennt wird, wodurch die Oberfläche 10 entsteht.

Infolge der in Figur 2 gezeigten Bearbeitung des Baumstammes 1 entstehen zwei Waldkanten 11, welche die Oberfläche 10 des Seitenwarebrettes 8 begrenzen und sich in dem hier gezeigten Ausführungsbeispiel im Wesentlichen entlang der Stammachse 3 erstrecken. Zwecks Übersichtlichkeit ist nur eine der Waldkanten 11 mit einem Bezugszeichen versehen. Jenseits der Waldkanten 11 erstreckt sich jeweils ein Waldkantenbereich des Baumstammes 1, der zur besseren Übersicht nicht mit einem Bezugszeichen versehen ist.

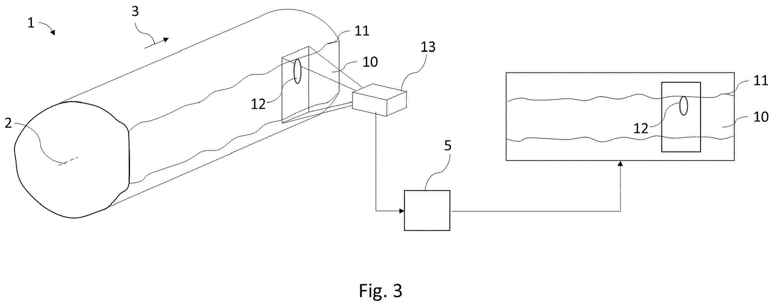

Mit Entfernen des Schwartenbereichs und der Schaffung der Oberfläche 10 wird ein Defekt 12 freigelegt, bei dem es sich in dem hier gezeigten Ausführungsbeispiel um einen Ast handelt, welcher sich ausgehend vom Stamminneren durch das Seitenwarenbrett 8 bis zu seiner Oberfläche 10 erstreckt. Ein derartiger Ast mindert grundsätzlich die Qualität des Seitenwarebretts 8, führt jedoch im Rahmen der hier erläuterten Ausführungsform nicht zwangsläufig dazu, dass das betroffene Seitenwarebrett 8 eliminiert und von der Weiterbearbeitung ausgeschlossen werden muss. Stattdessen wird, wie anhand der Figuren 3 und 4 im Detail erläutert ist, eine Astwuchsposition am Baumstamm ermittelt und damit eine optimierte Schnittlösung für den Baumstamm 1 bestimmt.

Gemäß Figur 3 wird der angespante Baumstamm 1, der auch als Kantling mit zwei geraden Oberflächen 10 oder als sogenanntes Model mit vier geraden Oberflächen 10 vorliegen kann, bildgebend geprüft. Hierfür kommt ein Kamerasystem 13 zum Einsatz. Es ist relevant, dass zum einen die Oberfläche 10 und zum anderen die Waldkanten 11 in dem Erfassungsbereich des Kamerasystems 13 liegen und erfasst werden.

Um eine Position des Defektes 12 gegenüber der Stammgeometrie bestimmen zu können, kann das Kamerasystem 13 derart kalibriert sein, dass die Positionsdaten in Abhängigkeit der Position und Bewegung des Baumstammes 1 und den Bildinformationen sowie dem Aufnahmezeitpunkt bestimmt werden können. In der hier gezeigten Ausführungsform wird zusätzlich zu der Oberfläche 10 auch die Waldkante 11 oder der Waldkantenbereich erfasst, wobei die Bestimmung der Defektposition gegenüber dem Baumstamm 1 in Abhängigkeit eines Waldkantenverlaufs erfolgt.

Es ist denkbar, dass ein Abgleich zwischen einem zweidimensionalen Verlauf der Waldkante erfolgt, welche sowohl in der ermittelten Stammgeometrie (vgl. Figur 1) enthalten ist als auch in einem Prüfergebnis einer zwei dimensionalen Prüfung der Oberfläche 10 (vgl. Figur 3). In Abhängigkeit hiervon kann die Defektposition und/oder Defektausbreitung in Bezug auf den Baumstamm (oder Kantling oder Model) genau bestimmt werden, insbesondere durch einen Abgleich zwischen einem zweidimensionalen Verlauf der Waldkante, welche in einem Profilschnitt der ermittelten Stammgeometrie und in einem zweidimensionalen Prüfgbild der Oberfläche 10 enthalten ist. Insbesondere erstreckt sich der Profilschnitt im Wesentlichen parallel zu der Stammachse, wie in der Seitenansicht gemäß Figur 3 gezeigt.

Sofern zusätzlich zu dem Kamerasystem 13 auch ein Profilsensor (nicht gezeigt) eingesetzt wird, kann die Erfassung der Oberfläche 10 und des Waldkantenbereichs getrennt voneinander erfolgen, wobei der Waldkantenbereich dreidimensional erfasst wird und die Oberfläche 10 zweidimensional. Ein derart erfasster Waldkantenbereich kann mit der ermittelten Stammgeometrie (vgl. Figur 1) abgeglichen werden und in Abhängigkeit der Relativposition zwischen dem Kamerasystem und dem Profilsensor die Defektposition und/oder Defektausbreitung in Bezug auf den Baumstamm (oder Kantling oder Model) genau bestimmt werden.

Anhand von Figur 4 ist gezeigt, dass eine optimierte Schnittlösung in Abhängigkeit der Defektposition 12 bestimmt wird. Hierbei wird das Seitenwarebrett 8, dessen Oberfläche 10 bildgebend geprüft wurde, mittels einer Trennebene 14 unterteilt, die im Wesentlichen senkrecht zu der Oberfläche 10 verläuft. Dadurch wird das Seitenwarebrett 8 in zwei Seitenwarebretter aufgeteilt, welche sich durch die Anzahl der ermittelten Holzdefekte, nämlich des hier beispielhaft erläuterten Asts, voneinander unterscheiden. Anschließend wird der Baumstamm 1 entsprechend der optimierten Schnittlösung bearbeitet. Hierfür kommt in nicht näher gezeigter Weise eine Ritzsäge zum Einsatz, welche die Seitenware 8 entsprechend der ermittelten Trennebene 14 unterteilt. Ferner werden zwei an die Seitenware angrenzende Waldkantenbereiche 15 ausgefräst, wodurch die unterteilten Seitenwarebretter im Wesentlichen gerade und parallel zueinander verlaufende Schmalseiten erhalten. Anschließend können die Seitenwarebretter mittels eines Sägeschnittes von dem Baumstamm 1 getrennt werden.

Das hier anhand der Figuren 1 bis 4 beschriebene Prinzip einer Unterteilung von Haupt- oder Seitenwarebrettern beruht auf der Erkenntnis, dass die Qualität und damit auch der erzielbare Handelspreis eines Haupt- oder Seitenwarebrettes wesentlich davon abhängen kann, ob dieses Holzdefekte aufweist, in welcher Anzahl diese vorliegen oder etwa wie stark sie ausgeprägt sind. Obwohl eine Verringerung der Breite eines theoretisch gewinnbaren Hauptwarebretts oder eines Seitenwarebrettes üblicherweise mit wirtschaftlichen Einbußen einhergeht, haben wirtschaftlichen Analysen überraschenderweise ergeben, dass der Handelswert eines Haupt- oder Seitenwarebretts in vorteilhafter Weise gesteigert werden kann, wenn dieses trotz vergleichsweise schmaler Abmessungen, insbesondere in der Breite, qualitätsabhängig hergestellt werden kann. Insbesondere steigt der erzielbare Handelspreis eines solchen Haupt- oder Seitenwarebretts aufgrund der Verringerung von Holzdefekten stärker, als dass er aufgrund einer verringerten Abmessung, insbesondere in der Breite, sinkt. Gleichzeitig kann das jeweils andere der unterteilten Haupt- oder Seitenwarebretter, welches eine geringere Qualität aufweist, für Zwecke vorgesehen werden, bei denen eine hohe Qualität nicht zwingend erforderlich ist, sodass hiermit ebenfalls ein wirtschaftlicher Vorteil erzielt werden kann.

Anstelle der hier erläuterten Durchführung des Verfahrens ist es denkbar, dass im Rahmen der Stammbearbeitung zunächst ein Seitenwarebrett von dem Baumstamm getrennt wird, wodurch die Oberfläche eines darunter liegenden Seitenwarebretts freigelegt und bildgebend geprüft wird. Dies ist vorteilhaft, da das erste Seitenwarebrett eines Seitenwarenstapels in der Regel eine geringere erreichbare Breite aufweist als ein darunterliegendes Seitenwarebrett. Dies führt dazu, dass außenliegende Seitenwarebretter entsprechend kleinere Abmessungen aufweisen und es aus wirtschaftlichen Gesichtspunkten nicht lohnend ist, diese für eine zweite, optimierte Schnittlösung zu berücksichtigen. Daher kann die zweite, optimierte Schnittlösung nicht anhand der Oberfläche eines ersten Seitenwarebretts, sondern erst anhand der Oberfläche eines darunter liegenden Seitenwarebretts, insbesondere eines zweiten Seitenwarebretts ermittelt werden.

In ebenso nicht gezeigter Weise könnte anstelle der Unterteilung der Seitenware auch die Hauptware im innenliegenden Bereich des Baumstamms in zwei Hauptwarebretter unterteilt werden. Im Unterschied zu dem hier beschriebenen Ausführungsbeispiel umfasst die trennende Bearbeitung des Baumstammes 1, die in Verbindung mit Figur 2 beschrieben ist, nicht lediglich die Entfernung eines Schwartenbereichs, sondern der gesamten Seitenware. Dies kann entsprechend der obigen Ausführungen zu den Figuren 1 bis 4 erfolgen oder ohne eine Unterteilung der Seitenware, sondern indem diese entsprechend der ersten Schnittlösung von dem Baumstamm getrennt wird.

## Patentansprüche

1. Verfahren zur Erzeugung von Schnittholz aus einem Baumstamm (1) mit den folgenden Verfahrensschritten:
A) Bestimmung einer ersten Schnittlösung für den Baumstamm (1), welche eine räumliche Anordnung von Seitenware und Hauptware umfasst;
B) Trennende Bearbeitung des Baumstammes (1) gemäß der Schnittlösung wobei eine im Wesentlichen ebene Oberfläche (10) der Hauptware oder der Seitenware erzeugt wird;
C) Qualitätsprüfung der Oberfläche (10) zur Bestimmung mindestens eines Holzdefektes (12) und/oder einer Holzdefekteigenschaft;
D) Bestimmung einer zweiten Schnittlösung in Abhängigkeit des ermittelten Holzdefektes (12) und/oder der Holzdefekteigenschaft, wobei die Hauptware oder die Seitenware gegenüber der ersten Schnittlösung in zumindest zwei Hauptwarebretter bzw. zwei Seitenwarebretter (8) unterteilt wird und/oder eine Unterteilung mindestens zweier Hauptwarebretter oder zweier Seitenwarebretter (8) gegenüber der ersten Schnittlösung verändert wird;
E) Trennende Bearbeitung des Baumstammes (1) gemäß der zweiten Schnittlösung.

2. Verfahren nach Anspruch 1 bei dem
in Verfahrensschritt C) der Holzdefekt (12) an der Oberfläche ortsaufgelöst und unter Bestimmung einer Defektposition und/oder räumlichen Defektausbreitung ermittelt wird.

3. Verfahren zumindest nach Anspruch 2, bei dem
vor und/oder während des Verfahrensschrittes C) eine Waldkante und/oder ein Waldkantenbereich, welche die Oberfläche der Haupt- oder Seitenware jeweils seitlich begrenzen, erfasst wird und die Defektposition und/oder die Defektausbreitung in Bezug auf den Baumstamm in Abhängigkeit der Waldkante und/oder des Waldkantenbereichs, ortsaufgelöst ermittelt werden.

4. Verfahren nach einem der voranstehenden Ansprüche, bei dem Verfahrensschritt D) in Abhängigkeit mindestens eines defektabhängigen Qualitätsparameters durchgeführt wird.

5. Verfahren nach Anspruch 8, bei dem
zumindest zwei der unterteilten Haupt- oder Seitenwarebretter (8) unterschiedliche Anzahlen von Defekten und/oder unterschiedliche Defektdichten und/oder unterschiedliche Defektpositionen und/oder unterschiedliche Defektarten aufweisen.

6. Verfahren nach einem der voranstehenden Ansprüche, bei dem in Verfahrensschritt C) der ermittelte Holzdefekt (12) zumindest teilweise von einem Ast gebildet ist, welcher sich von der Oberfläche (10) zumindest durch die Haupt- und/oder Seitenware erstreckt, wobei der ermittelte Holzdefekt (12) insbesondere ein Astquerschnitt oder ein Teil eines Astquerschnittes an der Oberfläche der Haupt- oder Seitenware ist.

7. Verfahren nach einem der voranstehenden Ansprüche, bei dem in Verfahrensschritt B) zumindest ein erstes Seitenwarebrett (8) gemäß der Schnittlösung von dem Baumstamm abgetrennt wird und dadurch die ebene Oberfläche (10) der Seitenware an dem Baumstamm (1) geschaffen wird, an welcher zumindest Verfahrensschritt C) durchgeführt wird.

8. Verfahren nach einem der voranstehenden Ansprüche, bei dem in Verfahrensschritt D) die Haupt- oder Seitenware derart unterteilt wird, dass eine Trennebene (14), welche im Wesentlichen orthogonal zu der Oberfläche (10) der Haupt- oder Seitenware verläuft und die zwei Haupt- oder Seitenwarebretter (8) unterteilt, erzeugt und/oder verschoben wird.

9. Verfahren nach einem der voranstehenden Ansprüche, bei dem in Verfahrensschritt D) zumindest ein Ritz erzeugt wird und die zwei oder mehr Haupt- oder Seitenwarebretter mittels eines Trennschnittes von dem Baumstamm (1) abgetrennt werden.

10. Vorrichtung zur Erzeugung von Schnittholz aus einem Baumstamm (1), insbesondere mittels eines Verfahrens nach einem der Ansprüche 1 bis 9, mit
einem Fördermittel, welches dazu vorgesehen ist, einen Baumstamm (1) entlang seiner Stammachse in einer Hauptförderrichtung (3) zu transportieren,
einem Profilsensor (4), welcher derart angeordnet ist, um bei der Förderbewegung des Baumstammes (1) eine Stammgeometrie zu ermitteln,
einer Datenverarbeitungseinheit (5), welche signaltechnisch mit dem Profilsensor (4) verbunden ist und dazu eingerichtet ist, eine erste Schnittlösung in Abhängigkeit der Stammgeometrie zu ermitteln,
einem ersten Trennmittel (9), welches derart angeordnet und dazu ausgebildet ist, um mit dem Baumstamm (1) während der Förderbewegung in einen trennenden Eingriff zu gelangen und eine im Wesentlichen ebene Oberfläche (10) einer Haupt- oder Seitenware gemäß der ermittelten Schnittlösung zu erzeugen,
einem Qualitätssensor (13), welcher derart angeordnet ist, um die Oberfläche (10) der Haupt- oder Seitenware zu prüfen und welcher dazu eingerichtet ist, mindestens eine Holzdefekt (12) und/oder Holzdefekteigenschaft an der Oberfläche (14) zu ermitteln, wobei der Prüfsensor (13) und die Datenverarbeitungseinheit (5) signaltechnisch miteinander verbunden sind, und wobei die Datenverarbeitungseinheit (5) dazu eingerichtet ist, eine zweite Schnittlösung in Abhängigkeit des Holzdefektes (12) zu ermitteln, wobei die Haupt- oder Seitenware gegenüber der ersten Schnittlösung in zumindest zwei Haupt- oder Seitenwarebretter (8) unterteilt ist und/oder eine Unterteilung zweier Haupt- oder Seitenwarebretter der ersten Schnittlösung verändert ist,
sowie zumindest ein zweites Trennmittel, welches derart angeordnet und dazu ausgebildet ist, um mit dem Baumstamm während der Förderbewegung in einen spanenden Eingriff zu gelangen und ihn gemäß der zweiten Schnittlösung zu bearbeiten.
